(19) Europäisches Patentamt
European Patent Office
Office européen des brevets

(11) **EP 4 503 451 A1**

(12) **EUROPEAN PATENT APPLICATION**
published in accordance with Art. 153(4) EPC

(43) Date of publication:
**05.02.2025 Bulletin 2025/06**

(21) Application number: **23826070.7**

(22) Date of filing: **25.05.2023**

(51) International Patent Classification (IPC):
**H04B 1/10** (2006.01)

(52) Cooperative Patent Classification (CPC):
**H04B 1/00; H04B 1/10; H04B 1/16**

(86) International application number:
**PCT/CN2023/096396**

(87) International publication number:
**WO 2023/246421 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.06.2022 CN 202210720531
29.09.2022 CN 202211202645**

(71) Applicant: **Huawei Technologies Co., Ltd.
Shenzhen, Guangdong 518129 (CN)**

(72) Inventors:
• **XU, Dian
Shenzhen, Guangdong 518129 (CN)**
• **LIN, Chao
Shenzhen, Guangdong 518129 (CN)**
• **LIU, Zheng
Shenzhen, Guangdong 518129 (CN)**
• **XU, Lingui
Shenzhen, Guangdong 518129 (CN)**
• **HE, Xudong
Shenzhen, Guangdong 518129 (CN)**
• **LI, Kun
Shenzhen, Guangdong 518129 (CN)**
• **LIU, Lulu
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **RECEIVER AND ELECTRONIC DEVICE**

(57)    This application provides a receiver and an electronic device, and relates to the field of communication technologies, for implementing a filtering function and reducing an area of the receiver. The receiver includes at least one receive channel. The at least one receive channel includes a first receive channel, and the first receive channel includes a first inductor and a first receiving circuit that are coupled to each other. The first inductor is configured to filter a received signal of a first frequency band to obtain a first received signal. A self-resonant frequency of the first inductor is in an interference frequency band corresponding to the first frequency band. The first receiving circuit is configured to process the first received signal.

FIG. 8

**Description**

This application claims priorities to Chinese Patent Application No. 202210720531.2, filed with the China National Intellectual Property Administration on June 23, 2022 and entitled "APPARATUS AND METHOD FOR ENHANCING ANTI-INTERFERENCE CAPABILITY OF CELLULAR MOBILE COMMUNICATION", and to Chinese Patent Application No. 202211202645.4, filed with the China National Intellectual Property Administration on September 29, 2022 and entitled "RECEIVER AND ELECTRONIC DEVICE", both of which are incorporated herein by reference in their entireties.

**TECHNICAL FIELD**

This application relates to the field of communication technologies, and in particular, to a receiver and an electronic device.

**BACKGROUND**

Currently, in a wireless local area network, a wireless air interface refers to a virtual logical interface on a wireless access point (access point, AP) and a station (Station, STA). The AP may be a communication server, a router, a switch, a bridge, a computer, or the like. The STA may be a device such as a mobile phone, a tablet computer, an ultra-mobile personal computer (Ultra-mobile Personal Computer, UMPC), a netbook, a wearable device (for example, a smart band and a smart watch), or an in-vehicle device. The AP and the STA may communicate with each other through a wireless link between wireless air interfaces. Different STAs have different communication frequencies. With growing communication demands, wireless air interface utilization is increasing, and frequency resources of the wireless air interfaces are increasingly strained. For example, wireless air interfaces may be used for corresponding STAs for communication at different communication frequencies such as kHz, MHz, and GHz. More STAs that simultaneously communicate at different communication frequencies make a problem of interference between adjacent STAs particularly prominent, affecting signal reception of the STAs. Therefore, a method is required to reduce the interference between the STAs.

**SUMMARY**

This application provides a receiver and an electronic device, and relates to the field of communication technologies, for implementing a filtering function and reducing an area of the receiver.
To achieve the foregoing objectives, the following technical solutions are used in embodiments of this application.
According to a first aspect, a receiver is provided. The receiver includes at least one receive channel. The at least one receive channel includes a first receive channel, and the first receive channel includes a first inductor and a first receiving circuit that are coupled to each other. The first inductor is configured to filter a received signal of a first frequency band to obtain a first received signal. A self-resonant frequency of the first inductor is in an interference frequency band corresponding to the first frequency band. The first receiving circuit is configured to process the first received signal.
In the foregoing technical solution, the received signal of the first frequency band is filtered by the first inductor that is on the first receive channel. Because the self-resonant frequency of the first inductor is in the interference frequency band corresponding to the first frequency band, a signal of the interference frequency band may be blocked, based on a self-resonance principle of the first inductor, from passing through, to implement a function of filtering the received signal of the first frequency band. Compared with a receiver that usually implements a filtering function by using a filter, the receiver provided in this technical solution implements the filtering function and has a reduced area; and further, when the receiver is used in an electronic device, an area of the electronic device is reduced.
In a possible implementation of the first aspect, a center frequency of the interference frequency band is greater than or equal to twice a center frequency of the first frequency band. In the foregoing possible implementation, the center frequency of the interference frequency band corresponding to the first frequency band may be determined based on the center frequency of the first frequency band. The self-resonant frequency of the first inductor may be determined based on the center frequency of the interference frequency band corresponding to the first frequency band. This improves a rate of determining the self-resonant frequency.
In a possible implementation of the first aspect, the first inductor includes coils that are stacked, and metal electrodes disposed at two ends of the coil. In the foregoing possible implementation, first inductors having different self-resonance frequencies or different quality factors may be obtained through changing a quantity of lines of the coils that are stacked, an area of the metal electrode, or a distance between the coil and the metal electrode. This increases diversity, selectivity, and operability of the first inductor
In a possible implementation of the first aspect, a quality factor of the first inductor is related to an area of the metal electrode. In the foregoing possible implementation, the quality factor of the first inductor is related to the area of the metal electrode. The quality factor of the first inductor in the first frequency band may be changed by changing the area of the metal electrode. For example, the area of the metal electrode may be increased, to increase the quality factor of the first inductor in the first frequency band, reduce an energy loss of the first received signal, and improve receiving sensitivity.

In a possible implementation of the first aspect, the self-resonant frequency of the first inductor is related to a quantity of turns of the coil and/or a distance between the coil and the metal electrode. In the foregoing possible implementation, the self-resonant frequency of the first inductor is related to the quantity of turns of the coil and/or the distance between the coil and the metal electrode. The self-resonant frequency of the first inductor may be changed by changing the quantity of turns of the coil and/or the distance between the coil and the metal electrode, to obtain a self-resonant frequency that meets a requirement. This increases the diversity and the selectivity of the first inductor

In a possible implementation of the first aspect, the at least one receive channel further includes a second receive channel. The second receive channel includes a second inductor and a second receiving circuit. The second inductor is configured to filter a received signal of a second frequency band to obtain a second received signal. The first frequency band is different from the second frequency band, and the second receiving circuit is configured to process the second received signal. In the foregoing possible implementation, the received signal of the second frequency band is filtered via the second inductor on the second receive channel, to obtain the second received signal. The first frequency band is different from the second frequency band. In other words, received signals of different frequency bands may be filtered via different inductors. This improves filtering efficiency.

In a possible implementation of the first aspect, an inductance value of the first inductor is less than an inductance value of the second inductor when the first frequency band is greater than the second frequency band. In the foregoing possible implementation, when the first frequency band is greater, the inductance value of the first inductor is smaller. In a manufacturing process, when there are a plurality of frequency bands, an inductance value of an inductor corresponding to each of the plurality of frequency bands may be quickly determined based on sizes of the plurality of frequency bands. This improves efficiency.

In a possible implementation of the first aspect, the self-resonant frequency of the first inductor is different from a self-resonant frequency of the second inductor. In the foregoing possible implementation, the self-resonance frequency of the first inductor and the second inductor filter the received signal of the first frequency band and the received signal of the second frequency band based on different self-resonance frequencies, to obtain the first received signal and the second received signal. This improves the filtering efficiency.

In a possible implementation of the first aspect, the at least one receive channel further includes a switching switch coupled to the at least one receive channel, and the switching switch is configured to switch between and select different receive channels in the at least one receive channel. In the foregoing possible implementation, the different receive channels in the at least one receive channel may be selected via the switching switch based on a frequency band of a received signal, so that an inductor on the receive channel implements a function of filtering the received signal of the frequency band. This improves quality of the received signal.

In a possible implementation of the first aspect, the receiver further includes at least one antenna, and the at least one antenna is coupled to the at least one receive channel in one-to-one correspondence. In the foregoing possible implementation, a signal is received through the at least one antenna, so that reception of a long-distance signal can be implemented. This improves efficiency of the signal reception.

According to a second aspect, a chip and a package substrate are provided. The chip is fastened to the package substrate, and the chip includes the receiver provided in the first aspect or any possible implementation of the first aspect.

According to a third aspect, an electronic device is provided. The electronic device includes a receiver, and the receiver is a receiver provided in the first aspect or any possible implementation of the first aspect.

It may be understood that the chip, the package substrate, and the electronic device that are provided above all include a same or corresponding feature of the receiver provided above. Therefore, for beneficial effects that can be achieved by the chip, the package substrate, and the electronic device, refer to beneficial effects of the corresponding receiver provided above. Details are not described herein again.

**BRIEF DESCRIPTION OF DRAWINGS**

FIG. 1 is a diagram of a structure of a receiver;
FIG. 2 is a diagram of a structure of a discrete filter;
FIG. 3 is a diagram of a structure of a terminal device according to an embodiment of this application;
FIG. 4 is a diagram of a structure of a receiver according to an embodiment of this application;
FIG. 5 is a diagram of an equivalent model of an inductor according to an embodiment of this application;
FIG. 6 is a diagram of a trend in which a resistance value and an inductive reactance value change with a frequency according to an embodiment of this application;

FIG. 7 is a diagram of a trend in which a quality factor changes with a frequency according to an embodiment of this application;

FIG. 8 is a diagram of a structure of another receiver according to an embodiment of this application;

FIG. 9 is a diagram of a structure of still another receiver according to an embodiment of this application;

FIG. 10 is a diagram of a structure of another receiver according to an embodiment of this application; and

FIG. 11 is a diagram of a structure of another receiver according to an embodiment of this application.

## DESCRIPTION OF EMBODIMENTS

In this application, "at least one" means one or more, and " a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one (piece) of a, b, or c may indicate a, b, c, a and b, a and c, b and c, or a, b, and c, where a, b, and c may be singular or plural. In addition, in embodiments of this application, terms such as "first" and " second" are used for distinguishing between same objects or similar objects whose functions and purposes are basically the same. For example, a first threshold and a second threshold are merely used for distinguishing between different thresholds, and a sequence thereof is not limited. A person skilled in the art may understand that the terms such as "first" and "second" do not limit a quantity or an execution sequence.

It should be noted that, in this application, terms such as "example" or "for example" are used to represent an example, an instance, or an illustration. Any embodiment or design scheme described as "example" or "for example" in this application should not be construed as being more preferred or advantageous than other embodiments or design schemes. To be specific, the words such as "example" or "for example" are intended to present a relative concept in a specific manner.

Before embodiments of this application are described, related knowledge of a wireless air interface is first described.

Currently, in a wireless local area network, the wireless air interface refers to a virtual logical interface on a wireless access point (access point, AP) and a station (Station, STA). The AP may be a communication server, a router, a switch, a bridge, a computer, or the like. The STA may be a device such as a mobile phone, a tablet computer, an ultra-mobile personal computer (Ultra-mobile Personal Computer, UMPC), a netbook, a wearable device (for example, a smart band and a smart watch), or an in-vehicle device. The AP and the STA may communicate with each other through a wireless link between wireless air interfaces. Different STAs have different communication frequencies. With growing communication demands, wireless air interface utilization is increasing, and frequency resources of the wireless air interfaces are increasingly strained. For example, wireless air interfaces may be used for corresponding STAs for communication at different communication frequencies such as kHz, MHz, and GHz. More STAs that simultaneously communicate at different communication frequencies make a problem of interference between adjacent STAs particularly prominent, affecting signal reception of the STAs. Therefore, a method is required to reduce the interference between the STAs.

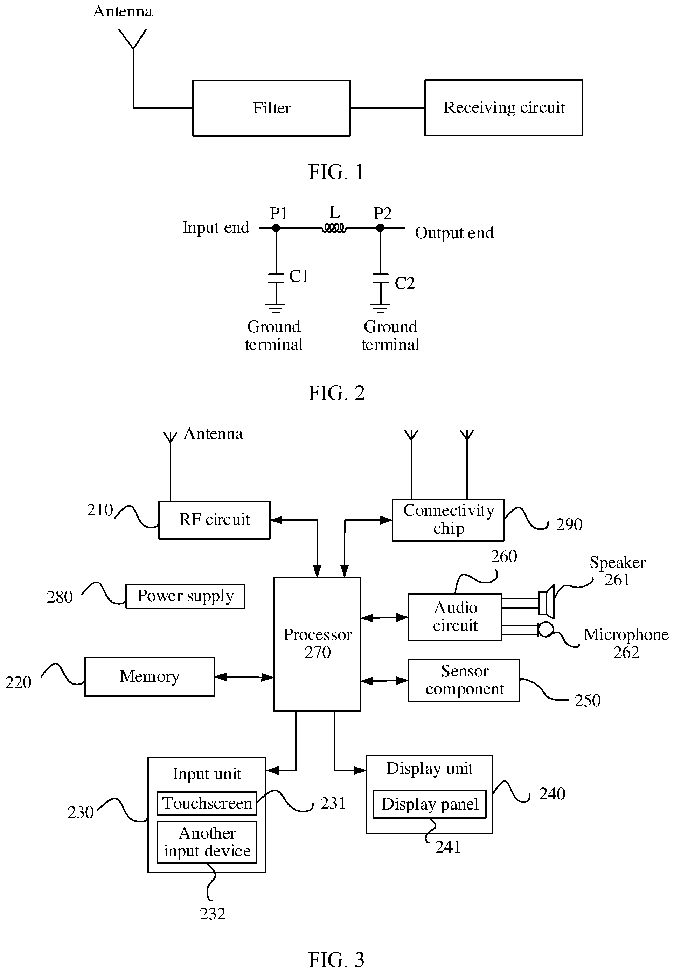

Currently, a filter in a receiver is usually used to reduce the interference between the STAs. FIG. 1 is a diagram of a structure of a receiver. The receiver includes an antenna, a filter, and a receiving circuit that are connected in sequence. The antenna is configured to: receive an electromagnetic wave, and transmit the received electromagnetic wave to the filter through a transmission cable. The filter is configured to filter out a specific frequency or a frequency other than the specific frequency in the electromagnetic wave, so that an electromagnetic wave of a specific frequency is obtained or eliminated. The receiving circuit is configured to: receive a filtered electromagnetic wave, and perform signal amplification and conversion on the filtered electromagnetic wave. FIG. 1 shows only a part of the structure of the receiver.

The filter shown in FIG. 1 may include a saw filter (saw filter), a ceramic filter (ltcc filter), and a discrete filter (discrete lc filter). FIG. 2 is a diagram of a structure of a discrete filter. The discrete filter includes an input end, a first capacitor C1, a second capacitor C2, an inductor L, and an output end. One electrode of the first capacitor C1, one end of the inductor L, and the input end are coupled to a first node P1. The other end of the inductor L, one electrode of the second capacitor C2, and the output end are coupled to a second node P2. The other electrode of the first capacitor Cl and the other electrode of the second capacitor C2 are both coupled to a ground terminal. In a working process of the discrete filter, the inductor L blocks a high-frequency signal from passing through and allows a low-frequency signal to pass through, and the first capacitor Cl and the second capacitor C2 allow the high-frequency signal to pass through and block the low-frequency signal from passing through. For the high-frequency signal that is to be blocked, the first capacitor Cl and the second capacitor C2 are used to absorb the signal, and the inductor L is used to block the signal. For the low-frequency signal that is to be allowed to pass through, high-impedance features of the first capacitor Cl and the second capacitor C2 and a low-impedance feature of the inductor L are used to help the signal pass through.

However, the filter in the receiver shown in FIG. 1 increases an area of the receiver. When the receiver is used in an electronic device, an area of the electronic device is increased. In addition, an insertion loss of the filter consumes energy in the electromagnetic wave. This reduces receiver sensitivity.

Based on this, embodiments of this application provide a receiver and an electronic device. The receiver includes at least one receive channel. The at least one receive channel includes a first receive channel, and the first receive channel includes a first inductor and a first receiving circuit that are coupled to each other. The first inductor is configured to filter a received signal of a first frequency band to obtain a first received signal. A self-resonant frequency of the first inductor is in an interference frequency band corresponding to the first frequency band. The first receiving circuit is configured to process the first received signal. The receiver provided in embodiments of this application filters the received signal of the first frequency band via the first inductor in the first receive channel. Because the self-resonant frequency of the first inductor is in the interference frequency band corresponding to the first frequency band, a signal of the interference frequency band may be blocked, based on a self-resonance principle of the first inductor, from passing through, to implement a function of filtering the received signal of the first frequency band. Compared with a receiver that usually implements a filtering function by using a filter, the receiver provided in this technical solution implements the filtering function and has a reduced area; and further, when the receiver is used in an electronic device, an area of the electronic device is reduced.

The technical solution provided in embodiments of this application may be applied to an electronic device. The electronic device may include a terminal device. The terminal device may include but is not limited to a personal computer, a server computer, a mobile device (for example a mobile phone, a tablet computer, or a media player), a wearable device, an in-vehicle device, a consumer terminal device, a mobile robot, an unmanned aerial vehicle, or the like. The following describes a specific structure of the terminal device by using an example in which the electronic device includes the terminal device.

FIG. 3 is a diagram of a structure of a terminal device according to an embodiment of this application. An example in which the terminal device is a mobile phone is used for description. As shown in FIG. 3, the mobile phone includes components such as a radio frequency (radio frequency, RF) circuit 210, a memory 220, an input unit 230, a display unit 240, a sensor component 250, an audio circuit 260, a processor 270, and a power supply 280.

The RF circuit 210 may be configured to: receive and send information, or receive and send a signal in a call process. Usually, the RF circuit 210 includes but is not limited to an antenna, an amplifier, a transceiver, a coupler, an LNA (low noise amplifier, low noise amplifier), a duplexer, and the like. Optionally, the antenna may include a plurality of receive antennas and a plurality of transmit antennas. In addition, the RF circuit 210 may further communicate with a network and another device through wireless communication, for example, communicate with an AP via a Wi-Fi network. In embodiments of this application, the RF circuit 210 may include a receiving circuit and at least one inductor. The receiving circuit may be configured to process a received signal. For example, the receiving circuit may include a signal amplifier, an analog to digital converter (analog to digital converter, A/D), a digital to analog converter (digital to analog converter, D/A), and the like. Each of the at least one inductor may be configured to filter a received signal of a corresponding frequency band.

The memory 220 may be configured to store a software program and a module. The processor 270 performs various function applications and data processing of the mobile phone by running the software program and the module that are stored in the memory 220. The memory 220 may mainly include a program storage area and a data storage area. The program storage area may store an operating system, an application program required by at least one function, and the like. The data storage area may store data (such as audio data, image data, and a phone book) that is created based on use of the mobile phone, and the like. In addition, the memory 220 may include a highspeed random access memory, or may include a non-volatile memory such as at least one magnetic disk storage device, a flash storage device, or another volatile solid-state storage device.

The input unit 230 may be configured to: receive input digital or character information, and generate a key signal input related to a user setting and function control of the mobile phone. Specifically, the input unit 230 may include a touchscreen 231 and another input device 232. The touchscreen 231, also referred to as a touch panel, may collect a touch operation (for example, an operation performed by a user on or near the touchscreen 231 by using any proper object or accessory such as a finger or a stylus) performed by a user on or near the touchscreen 231, and drive a corresponding connection apparatus based on a preset program. The another input device 232 may include but is not limited to one or more of a physical keyboard, a function key (such as a volume control key or a power on/off key), a trackball, a mouse, a joystick, or the like.

The display unit 240 may be configured to display information entered by the user or information provided for the user, and various menus of the mobile phone. The display unit 240 may include a display panel 241. Optionally, the display panel 241 may be configured in a form of a liquid crystal display (liquid crystal display, LCD), an organic light-emitting diode (organic light-emitting diode, OLED), or the like. Further, the touchscreen 231 may cover the display panel 241. After detecting the touch operation performed on or near the touchscreen 231, the touchscreen 231 sends the touch operation to the processor 270 to determine a type of a touch event, and then the processor 270 provides corresponding visual output on the display panel 241 based on the type of the touch event. Although in the figure, the touchscreen 231 and the display panel 241 are used as two independent components to implement input and output functions of the mobile phone, in some embodiments, the touchscreen 231 and the display panel 241 may be integrated to implement the input and output functions of the mobile phone.

The sensor component 250 includes one or more sensors, and is configured to provide status evaluation in various aspects for the mobile phone. The sensor component 250 may include a temperature sensor, an acceleration sensor, a gyroscope sensor, a magnetic sensor, or a pressure sensor. The sensor component 250 may detect a temperature change of the mobile phone, acceleration/deceleration of the mobile phone, an orientation of the mobile phone, an on/off state of the mobile phone, relative positioning of the component, or the like. In addition, the sensor component 250 may further include an optical sensor, for example, a CMOS or CCD image sensor, configured to be used in an imaging application.

The audio circuit 260, a speaker 261, and a microphone 262 may provide an audio interface between the user and the mobile phone. The audio circuit 260 may convert received audio data into an electrical signal and transmit the electrical signal to the speaker 261, and the speaker 261 converts the electrical signal into a sound signal for output. Additionally, the microphone 262 converts a collected sound signal into an electrical signal, and the audio circuit 260 receives the electrical signal, converts the electrical signal into audio data, and then outputs the audio data to the RF circuit 210, to send the audio data to, for example, another mobile phone, or outputs the audio data to the memory 220 for further processing.

The processor 270 is a control center of the mobile phone and is connected to all parts of the entire mobile phone through various interfaces and lines, and performs various functions and data processing of the mobile phone by running or executing the software program and/or the module stored in the memory 220 and invoking the data stored in the memory 220, to perform overall monitoring on the mobile phone. Optionally, the processor 270 may include one or more processing units. Optionally, an application processor and a modem processor may be integrated into the processor 270. The application processor mainly processes an operating system, a user interface, an application program, and the like. The modem processor mainly processes the wireless communication. It may be understood that the foregoing modem processor may be alternatively not integrated into the processor 270. In embodiments of this application, the processor 270 may further include a signal processing unit. The signal processing unit may be configured to process an output signal of the receiving circuit. For example, the signal processing unit may be configured to modulate and demodulate the output signal of the receiving circuit, to obtain a target signal.

The mobile phone further includes the power supply 280 (such as a battery) that supplies power to each component. Optionally, the power supply may be logically connected to the processor 270 via a power management system, to implement functions such as charging and discharging management and power consumption management via the power management system.

Further, the mobile phone may further include a connectivity (connectivity) chip 290, and a Wi-Fi chip may be integrated into the chip 290. In addition, the chip 290 may further integrate one or more of a Bluetooth module, a near field wireless communication (near field communication, NFC) module, a global navigation satellite system (global navigation satellite system, GNSS) module, or a frequency modulation (frequency modulation, FM) module. Details are not described herein in this application.

A person skilled in the art may understand that the structure of the mobile phone shown in FIG. 3 does not constitute any limitation on the mobile phone. The mobile phone may include components more or fewer than those shown in the figure, or combine some components, or have a different component arrangement.

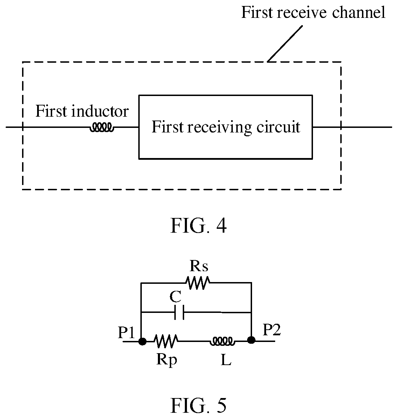

FIG. 4 is a diagram of a structure of a receiver according to an embodiment of this application. The receiver includes at least one receive channel. The at least one receive channel includes a first receive channel, and the first receive channel includes a first inductor and a first receiving circuit that are coupled to each other. The first inductor is configured to filter a received signal of a first frequency band to obtain a first received signal. A self-resonant frequency of the first inductor is in an interference frequency band corresponding to the first frequency band. The first receiving circuit is configured to process the first received signal. FIG. 4 shows only a part of the structure of the receiver.

The at least one receive channel may include one receive channel, or may include a plurality of receive channels. For example, when the at least one receive channel includes one receive channel, the receive channel is a first receive channel. When the at least one receive channel includes a plurality of receive channels, the at least one receive channel may include two receive channels, three receive channels, or even more receive channels. This may be specifically determined based on an actual requirement or experience of a related skilled person. This is not specifically limited in this application.

In addition, the first frequency band may be any one of a low frequency band, a medium frequency band, and a high frequency band. The low frequency band, the medium frequency band, and the high frequency band are obtained through dividing frequencies of the received signal in ascending order. In a first possible example, the first frequency band may be the low frequency band. In this case, a frequency range of the first frequency band may be from 500 to 1000 megahertz (MHz). In a second possible example, the first frequency band may alternatively be the medium frequency band. In this case, a frequency range of the first frequency band may be from 1000 to 2300 megahertz (MHz). In a third possible example, the first frequency band may alternatively be the high frequency band. In this case, a frequency range of the first frequency band may be from 2300 to 2700 megahertz (MHz). In an actual application, a frequency range of any one of the low frequency band, the medium frequency band, and the high frequency band may be larger or smaller than the frequency range provided in the foregoing example. The frequency range shown in the foregoing example is merely an example. For example, in an actual application, a range of the medium frequency band may be from 1800 to 2300 megahertz (MHz). Specifically, division may be performed based on an actual requirement or experience of a related skilled person. This is not specifically limited in embodiments of this application. The received signal may include a radio frequency signal.

In addition, the self-resonant frequency of the first inductor is a frequency of the inductor in a case in which a quality factor of the first inductor is zero. A center frequency of the interference frequency band corresponding to the first frequency band is greater than or equal to twice a center frequency of the first frequency band. For example, when the center frequency of the first frequency band is 1250, the center frequency of the interference frequency band corresponding to the first frequency band may be greater than or equal to 2500.

In addition, an inductance value of the first inductor is related to the frequency range of the first frequency band. To be specific, a larger frequency range of the first frequency band indicates a smaller inductance value of the first inductor. The following separately describes a relationship between the inductance value of the first inductor and the frequency range of the first frequency band in cases in which the first frequency band includes different frequency ranges.

In a first possible example, the first frequency band may be the low frequency band. In this case, the inductance value of the first inductor may be 33 nh (nh). In a second possible example, the first frequency band may be the medium frequency band. In this case, the inductance value of the first inductor may be 16 nh (nh). In a third possible example, the first frequency band may be the high frequency band. In this case, the inductance value of the first inductor may be 8 nh (nh). In an actual application, the inductance value of the first inductor may be greater or less than the inductance values provided in the foregoing examples. The inductance values shown in the foregoing examples are merely examples, and division may be specifically performed based on an actual requirement or experience of a related skilled person. This is not specifically limited in embodiments of this application.

Further, the first inductor includes coils that are stacked and metal electrodes disposed at two ends of the coil. A wire wound around the coil is not an ideal wire, and there is an equivalent resistance of a wire loss. There is a heat loss in a magnetic core of the first inductor, and there is an equivalent resistance of a magnetic core loss. There is a distributed capacitance between conductors (for example, coils) that are inside the first inductor, and there is an equivalent capacitance between the coils. Therefore, an equivalent model of the first inductor includes equivalent resistances, the equivalent capacitance, and an inductance.

FIG. 5 is a diagram of an equivalent model of an inductor according to an embodiment of this application. It can be learned from FIG. 5 that the inductor includes a first resistor Rp, a second resistor Rs, a capacitor C, and an inductor L. One end of the first resistor Rp, one end of the second resistor Rs, and one electrode of the capacitor C are coupled to a first node P1. The other end of the first resistor Rp is coupled to one end of the inductor. The other end of the second resistor Rs, the other end of the inductor L, and the other electrode of the capacitor C are coupled to a second node P2. The first resistor Rp is an equivalent resistance of a magnetic core loss of the inductor. The second resistor Rs is an equivalent resistance of a wire loss of a coil of the inductor. The capacitor C is an equivalent capacitance between coils of the inductor. The inductor L is an actual inductance value of the inductor. Because of presence of the capacitor C, the capacitor C and the inductor L form a resonant circuit, and a resonance frequency of the resonant circuit is a self-resonant frequency of the inductor

Self-resonant frequency principle: When a frequency of an inductor is lower than a self-resonant frequency, impedance of the inductor increases as the frequency increases. When a frequency of an inductor is equal to a self-resonant frequency, impedance of the inductor reaches a maximum value. When a frequency of an inductor is higher than a self-resonant frequency, impedance of the inductor decreases as the frequency increases, and when a resistance decreases to form a resonant cavity with a capacitor, a quality factor Q of the inductor in this case is zero, the inductor is capacitive, and the inductor presents a feature of a wavetrap, to block a signal of such a frequency from passing through.

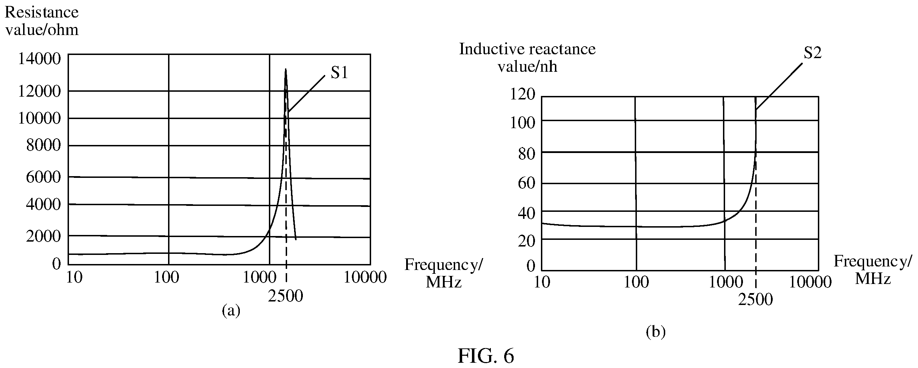

FIG. 6 is a diagram of trends in which a resistance value and an inductive reactance value that are of an inductor change with a frequency of the inductor according to an embodiment of this application. (a) in FIG. 6 is a diagram of a trend in which a resistance value of an inductor changes with a frequency of the inductor. (b) in FIG. 6 is a diagram of a trend in which an inductive reactance value of an inductor changes with a frequency of the inductor As shown in (a) in FIG. 6, a horizontal coordinate represents a frequency/megahertz (MHz), and a vertical coordinate represents a resistance value/ohm (ohm). It can be known from a curve S1 that, before a self-resonant frequency, the resistance value increases as the frequency increases; the resistance value reaches a maximum value at the self-resonant frequency; and after the self-resonant frequency, the resistance value decreases as the frequency increases. As shown in (b) in FIG. 6, a horizontal coordinate represents a frequency/megahertz (MHz), and a vertical coordinate represents an inductive reactance value/nanohenry (nh). It can be learned from a curve S2 that, before a self-resonant frequency, an inductive reactance value increases as a frequency increases; the inductive reactance value reaches a maximum value at the self-resonant frequency; and the inductive reactance value may be approximately zero after the self-resonant frequency. In FIG. 6, an example in which the self-resonant frequency is 2500 MHz is used.

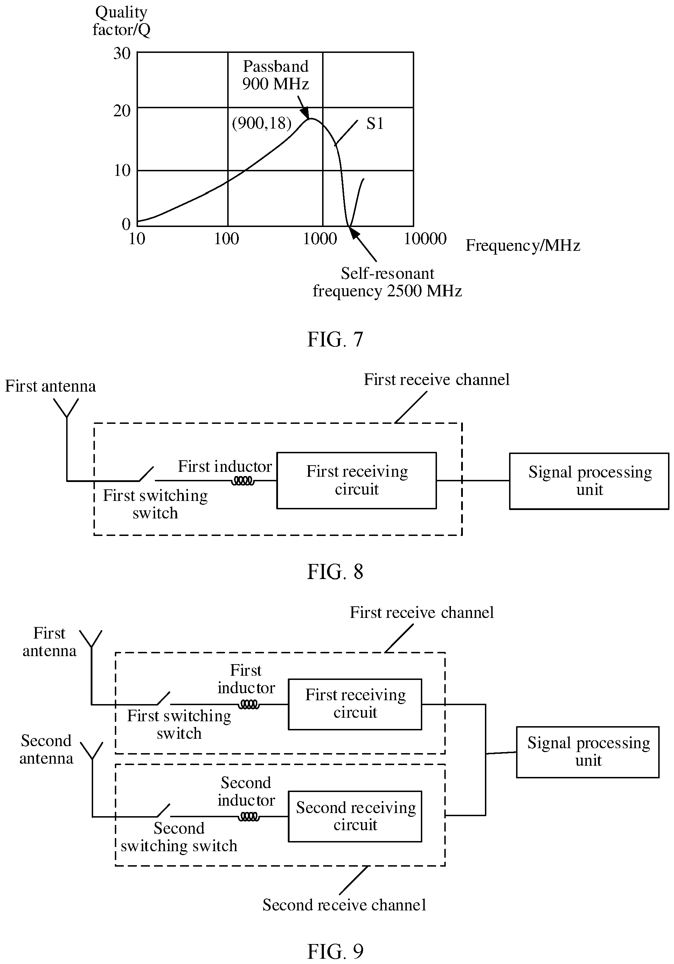

In a changing process of the frequency of the inductor, a quality factor of the inductor changes with the frequency. FIG. 7 is a diagram of a trend in which a quality factor of an inductor changes with a frequency of the inductor according to an embodiment of this application. A horizontal coordinate represents a frequency/megahertz (MHz), and a vertical coordinate represents a quality factor. It can be learned from a curve S1 that, before a frequency reaches 900 MHz, the quality factor increases as the frequency increases. When the frequency reaches 900 MHz, the quality factor reaches a maximum value of 18. In this case, an energy loss of a signal is minimum. Therefore, a passband frequency of the inductor may be 900 MHz. When the frequency is greater than 900 MHz and close to a self-resonant frequency, the quality factor decreases as the frequency increases. When the frequency is equal to 2500, the quality factor decreases to 0. When the frequency is greater than 2500, the quality factor Q gradually increases, but an increased quality factor Q is still small and may be approximately zero. Therefore, a stopband frequency of the inductor is 2500 MHz. It can be learned from FIG. 7 that, when the frequency of the inductor is close to the self-resonant frequency, the quality factor Q of the inductor decreases rapidly as the frequency increases. When an absolute value of a difference between the frequency of the inductor and the self-resonant frequency is less than a preset frequency threshold, the quality factor of the inductor is less than or equal to a preset threshold. For example, in an actual application, the preset frequency threshold may be 50 MHz, and the preset threshold may be equal to 5. In this case, the quality factor Q may be approximately zero, and the inductor is capacitive, has a feature of a narrowband notch filter (notch filter), and blocks a signal of a specific frequency and a signal of a frequency within a specific range of the specific frequency. For example, the range may be ±50 MHz, and the inductor has a filtering function for both the signal of the specific frequency and the signal of the frequency within the specific range of the specific frequency. For example, the inductor has a filtering function for a signal of 24500 MHz and a signal of 2550 MHz. In FIG. 7, an example in which the self-resonant frequency is 2500 MHz is used.

When the difference between the frequency of the inductor and the self-resonant frequency is less than or equal to the preset frequency threshold, the quality factor of the inductor is less than or equal to the preset threshold. For example, in an actual application, the preset threshold is equal to 5. In this case, the inductor is capacitive, and the received signal of the specific frequency can be attenuated quickly, so that the signal of the specific frequency is blocked from passing through, to implement filtering. The following describes in detail a filtering principle of the first inductor based on the self-resonant frequency principle.

The receiver receives the received signal of the first frequency band. The first frequency band corresponds to a first interference frequency band, and a frequency range of the first interference frequency band corresponding to the first frequency band may be determined based on the frequency range of the first frequency band. The frequency range of the first interference frequency band is twice the frequency range of the first frequency band. For example, when the frequency range of the first frequency band is from 500 to 1000 megahertz (MHz), the frequency range of the first interference frequency band corresponding to the first frequency band is from 1000 to 2000 megahertz (MHz). An appropriate first inductor is selected, for filtering, based on the frequency range of the first interference frequency band. Specifically, the self-resonant frequency of the first inductor is in the frequency range of the first interference frequency band, and a difference between an upper frequency limit of the first frequency band and the self-resonant frequency is less than or equal to a preset frequency threshold. For example, if the preset frequency threshold is 100 megahertz (MHz), the self-resonant frequency is 1100 MHz. When a frequency is greater than 1000 MHz and less than 1200 MHz, an inductive reactance value of the first inductor decreases rapidly as the frequency increases, a quality factor of the inductor is less than or equal to 5, and may be approximately zero. In this case, the first inductor is capacitive. Therefore, a signal with the frequency greater than 1000 MHz and less than 1200 MHz may be rapidly attenuated, so that the signal of the frequency in the range is blocked from passing through, to implement filtering.

Further, the self-resonant frequency of the first inductor is related to a quantity of turns of the coil and/or a distance between the coil and the metal electrode. Therefore, in a process of manufacturing the first inductor, a self-resonant frequency that meets a requirement may be obtained through changing the quantity of turns of the coil of the first inductor and/or the distance between the coil and the metal electrode. Specifically, the self-resonant frequency that meets the requirement may be obtained through increasing or decreasing the quantity of turns of the coil of the first inductor, and/or increasing or decreasing the distance between the coil and the metal electrode.

Further, the quality factor of the first inductor is related to an area of the metal electrode. Therefore, in the process of manufacturing the first inductor, areas of the metal electrodes at the two ends of the coil of the first inductor may be increased to reduce the equivalent resistances in the coil. This increases the quality factor of the first inductor in the first frequency band, reduces an energy loss of a received signal, and improves receiving sensitivity of the receiver. The quality factor Q satisfies Formula (1):

$$Q = \frac{\omega L}{r} \qquad (1)$$

r represents an equivalent resistance of the first inductor. In other words, r represents a sum of the equivalent resistance of the magnetic core loss of the first inductor and the equivalent resistance of the wire loss of the coil. Larger areas of the metal electrodes at the two ends of the coil indicate a smaller equivalent resistance r. It can be learned from Formula (1) that the smaller equivalent resistance r indicates a larger quality factor Q. Therefore, the areas of the metal electrodes at the two ends of the coil of the first inductor may be increased, to increase the quality factor of the first inductor in the first frequency band, reduce the energy loss of the received signal, and improves the receiving sensitivity of the receiver.

Optionally, when the first inductor is a ceramic inductor, the first inductor further includes a ceramic dielectric body. The ceramic dielectric body may be configured to fasten the coil of the first inductor. In the process of manufacturing the first inductor, the quality factor of the first inductor may also be increased by changing a component of the ceramic dielectric body, to reduce the energy loss of the received signal. For example, a content of aluminum oxide $Al_2O_3$ in the ceramic dielectric body may be increased from 93% to 98.5%, to increase a dielectric constant of the ceramic dielectric body. This improves the quality factor of the first inductor

Further, the at least one receive channel further includes a switching switch coupled to the at least one receive channel, and the switching switch is configured to switch between and select different receive channels in the at least one receive channel.

When the at least one receive channel includes one receive channel, the switching switch includes one switching switch, and the switching switch may be configured to switch and select the receive channel. When the at least one receive channel includes a plurality of receive channels, the switching switch may include one switching switch, or may include a plurality of switching switches. In a first possible example, the switching switch includes one switching switch, and the switching switch may be configured to switch between and select different receive channels in the plurality of receive channels based on a frequency of the received signal. In a second possible example, the switching switch includes the plurality of switching switches, and each of the plurality of switching switches may be configured to switch and select a corresponding receive channel in the plurality of receive channels.

Further, the receiver further includes at least one antenna, and the at least one antenna is coupled to the at least one receive channel in one-to-one correspondence. Each of the at least one antenna may be configured to receive a signal. The signal may be the received signal provided above, and the received signal may be an electromagnetic wave signal.

Further, the receiver further includes a signal processing unit, configured to process an output signal of the at least one receive channel. The output signal at least includes the first received signal. For example, the signal processing unit may be configured to demodulate the first received signal to obtain a target signal.

FIG. 8 is a diagram of a structure of another receiver according to an embodiment of this application. The receiver includes a first antenna, a first switching switch, a first inductor, a first receiving circuit, and a signal processing unit. One end of the antenna is coupled to one end of the switching switch. The other end of the switching switch is coupled to one end of the inductor. The other end of the inductor is coupled to an input end of the receiving circuit. An output end of the receiving circuit is coupled to an input end of the signal processing unit. An output end of the signal processing unit is coupled to an output end of the receiver. The first switching switch, the first inductor, and the first receiving circuit form a first receive channel. Functions of each part of the receiver shown in FIG. 8 are similar to the functions of each part of the receiver provided in the foregoing embodiments. Details are not described herein again. In FIG. 8, an example in which the receiver includes one receive channel (a first receive channel) is used for description.

In another possible embodiment, the at least one receive channel further includes a second receive channel. The second receive channel includes a second inductor and a second receiving circuit. The second inductor is configured to filter a received signal of a second frequency band to obtain a second received signal. A first frequency band is different from the second frequency band; and the second receiving circuit is configured to process the second received signal.

Further, an inductance value of the first inductor is less than an inductance value of the second inductor when the first frequency band is greater than the second frequency band. Because the first frequency band is different from the second frequency band, a frequency range of a first interference frequency band corresponding to the first frequency band is different from a frequency range of a second interference frequency band corresponding to the second frequency band. The first inductor and the second inductor are configured to filter received signals of different frequency bands, so that a self-resonant frequency of the first inductor is different from a self-resonant frequency of the second inductor.

FIG. 9 is a diagram of a structure of another receiver according to an embodiment of this application. The receiver includes a first receive channel, a second receive channel, a first antenna and a second antenna that are respectively coupled to the first receive channel and the second receive channel, and a signal processing unit. The first receive channel includes a first switching switch, a first inductor, and a first receiving circuit. The second receive channel includes a second switching switch, a second inductor, and a second receiving circuit. Functions of each part of the receiver shown in FIG. 9 are similar to the functions of each part of the receiver provided in the foregoing embodiments. Details are not described herein again. In FIG. 9, an example in which the receiver includes two receive channels and each channel corresponds to one switching switch is used for description. In an actual application, the receiver may include three or more receive channels. This is not specifically limited in this application.

Optionally, the receiver may further include a receiving matching module. The receiving module circuit may be configured to match at least one antenna of the receiver with the at least one receive channel, so that the at least one antenna is connected to the at least one receive channel.

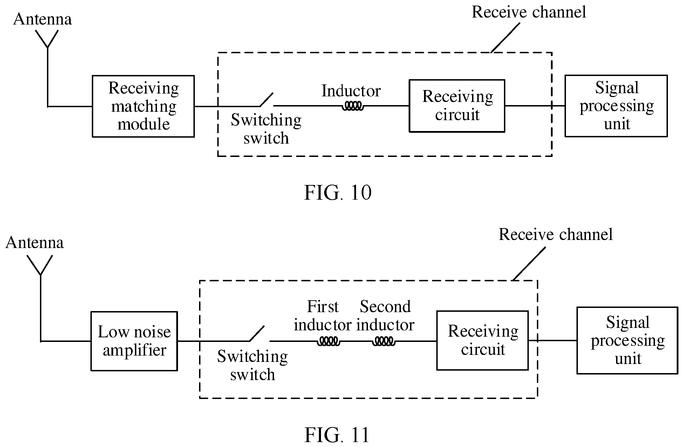

FIG. 10 is a diagram of a structure of another receiver according to an embodiment of this application. The receiver includes an antenna, a receiving matching module, a switching switch, an inductor, a receiving circuit, and a signal processing unit. One end of the antenna is coupled to one end of the receiving matching module. The other end of the receiving matching module is coupled to one end of the switching switch. The other end of the switching switch is coupled to one end of the inductor. The other end of the inductor is coupled to an input end of the receiving circuit. An output end of the receiving circuit is coupled to an input end of the signal processing unit. An output end of the signal processing unit is coupled to an output end of the receiver. Functions of each part of the receiver shown in FIG. 10 are similar to the functions of each part of the receiver provided in the foregoing embodiments. Details are not described herein again. In FIG. 10, an example in which the receiver includes one receive channel is used for description.

In another possible embodiment, the receiving matching module may be a low noise amplifier. The receive channel may include a plurality of series inductors, and self-resonance frequencies of the plurality of series inductors are different. For example, FIG. 11 is a diagram of a structure of a receiver according to an embodiment of this application. The receiver includes an antenna, a switching switch, a low noise amplifier, a first inductor, a second inductor, a receiving circuit, and a signal processing unit that are connected in sequence. Self-resonance frequencies of the first inductor and the second inductor are different. In this embodiment, a radio frequency signal of a frequency band is filtered based on the plurality of inductors that are connected in series and that have different self-resonance frequencies. This improves a filtering effect and improves quality of the radio frequency signal. In FIG. 11, an example in which the plurality of series inductors include two inductors is used.

A performance test is performed on the receiver provided in this embodiment of this application. In a test process, interference scanning is performed on a received signal of a first receiving frequency band at a frequency interval of 100 kilohertz (kHz) and by using a monophonic signal with strength of -15 dBm. The receiver can normally receive the received signal of the first frequency band, but cannot receive the monophonic signal, so as to implement filtering. In addition, an energy loss of the received signal is reduced, and receiving sensitivity of the receiver is improved.

According to an embodiment of this application, a receiver is provided. The receiver includes at least one receive channel. The at least one receive channel includes a first receive channel, and the first receive channel includes a first inductor and a first receiving circuit that are coupled to each other. The first inductor is configured to filter a received signal of a first frequency band to obtain a first received signal. The first receiving circuit is configured to process the first received signal. The receiver provided in this embodiment of this application filters the received signal of the first frequency band via the first inductor, to obtain the first received signal, to achieve a filtering effect. Compared with the receiver shown in FIG. 1, the receiver herein has a reduced area because an area of the first inductor is less than an area of a filter; and when the receiver herein is integrated into an electronic device, an area of the electronic device is reduced.

According to an embodiment of this application, a chip and a package substrate are further provided. The chip is fastened to the package substrate, and the chip may include the receiver shown in FIG. 4, FIG. 8, FIG. 9, or FIG. 10 above.

According to an embodiment of this application, an electronic device is further provided. The electronic device includes a receiver, and the receiver may include the receiver shown in FIG. 4, FIG. 8, FIG. 9, or FIG. 10 above. When the electronic device includes a terminal device, a specific structure of the terminal device may be shown in FIG. 3.

For related descriptions of the receiver, refer to the related descriptions of the receiver provided above. Details are not described herein again in this embodiment of this application.

In conclusion, it should be noted that, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A receiver, wherein the receiver comprises at least one receive channel, the at least one receive channel comprises a first receive channel, and the first receive channel comprises a first inductor and a first receiving circuit that are coupled to each other;

   the first inductor is configured to filter a received signal of a first frequency band to obtain a first received signal, wherein a self-resonant frequency of the first inductor is in an interference frequency band corresponding to the first frequency band; and
   the first receiving circuit is configured to process the first received signal.

2. The receiver according to claim 1, wherein a center frequency of the interference frequency band is greater than or equal to twice a center frequency of the first frequency band.

3. The receiver according to claim 1 or 2, wherein the first inductor comprises coils that are stacked, and metal electrodes disposed at two ends of the coil.

4. The receiver according to claim 3, wherein a quality factor of the first inductor is related to an area of the metal electrode.

5. The receiver according to claim 3 or 4, wherein the self-resonant frequency of the first inductor is related to a quantity of turns of the coil and/or a distance between the coil and the metal electrode.

6. The receiver according to any one of claims 1 to 5, wherein the at least one receive channel further comprises a second receive channel, and the second receive channel comprises a second inductor and a second receiving circuit;

    the second inductor is configured to filter a received signal of a second frequency band to obtain a second received signal, wherein the first frequency band is different from the second frequency band; and
    the second receiving circuit is configured to process the second received signal.

7. The receiver according to claim 6, wherein an inductance value of the first inductor is less than an inductance value of the second inductor when the first frequency band is greater than the second frequency band.

8. The receiver according to claim 6 or 7, wherein the self-resonant frequency of the first inductor is different from a self-resonant frequency of the second inductor

9. The receiver according to any one of claims 1 to 8, wherein the at least one receive channel further comprises a switching switch coupled to the at least one receive channel; and
the switching switch is configured to switch between and select different receive channels in the at least one receive channel.

10. The receiver according to any one of claims 1 to 9, wherein the receiver further comprises at least one antenna, and the at least one antenna is coupled to the at least one receive channel in one-to-one correspondence.

11. The receiver according to any one of claims 1 to 10, wherein the receiver further comprises:
a signal processing unit, configured to process an output signal of the at least one receive channel, wherein the output signal comprises at least the first received signal.

12. A chip and a package substrate, wherein the chip is fastened to the package substrate, and the chip comprises the receiver according to any one of claims 1 to 11.

13. An electronic device, wherein the electronic device comprises a receiver, and the receiver is the receiver according to any one of claims 1 to 11.

Antenna

Filter | Receiving circuit

FIG. 1

Input end  P1    L    P2   Output end

C1          C2

Ground        Ground
terminal      terminal

FIG. 2

Antenna

210  RF circuit            Connectivity chip  290

                                              260
                                                    Speaker
                                                    261
280  Power supply          Audio circuit
                    Processor            Microphone
                    270                  262

220  Memory                Sensor component
                                              250

Input unit           Display unit
Touchscreen    231   Display panel    240
230
Another input device                  241

232

FIG. 3

First receive channel

First inductor

First receiving circuit

FIG. 4

Rs

C

P1 ● Rp L ● P2

FIG. 5

FIG. 6

Quality
factor/Q

Passband
900 MHz

(900,18)

S1

Self-resonant
frequency 2500 MHz

Frequency/MHz

FIG. 7

First antenna

First receive channel

First inductor

First receiving
circuit

Signal processing
unit

First switching
switch

FIG. 8

First receive channel

First
antenna

First
inductor

First receiving
circuit

First switching
switch

Signal processing
unit

Second
antenna

Second
inductor

Second receiving
circuit

Second
switching switch

Second receive channel

FIG. 9

Antenna

Receive channel

Receiving matching module — Switching switch — Inductor — Receiving circuit — Signal processing unit

**FIG. 10**

Antenna

Receive channel

Low noise amplifier — Switching switch — First inductor — Second inductor — Receiving circuit — Signal processing unit

**FIG. 11**

## INTERNATIONAL SEARCH REPORT

| International application No. |
| --- |
| **PCT/CN2023/096396** |

**A. CLASSIFICATION OF SUBJECT MATTER**

H04B1/10(2006.01)i

According to International Patent Classification (IPC) or to both national classification and IPC

**B. FIELDS SEARCHED**

Minimum documentation searched (classification system followed by classification symbols)

IPC:H04B,H04L

Documentation searched other than minimum documentation to the extent that such documents are included in the fields searched

Electronic data base consulted during the international search (name of data base and, where practicable, search terms used)

CNTXT, ENTXTC, ENTXT, VEN, CNKI: 不同, 第二, 电感, 多, 干扰, 过滤, 降低, 开关, 滤波, 滤除, 频段, 频率, 切换, 去除, 抑制, 噪声, 自谐振, 线圈, 电极, different, second, inductor, multi+, interference, filter, reduc+, switch, band, frequency, remov +, suppress, noise, self-resonance, coil, electrode

**C. DOCUMENTS CONSIDERED TO BE RELEVANT**

| Category* | Citation of document, with indication, where appropriate, of the relevant passages | Relevant to claim No. |
| --- | --- | --- |
| Y | CN 102420625 A (ZTE CORP.) 18 April 2012 (2012-04-18) description, paragraphs [0002]-[0003] and [0046]-[0076] | 1-13 |
| Y | CN 201167317 Y (ZTE CORP.) 17 December 2008 (2008-12-17) description, pages 1 and 3 | 1-13 |
| Y | CN 114337703 A (OPPO (CHONGQING) INTELLIGENT TECHNOLOGY CO., LTD.) 12 April 2022 (2022-04-12) description, paragraphs [0023]-[0075] | 1-13 |
| Y | US 2021092214 A1 (MURATA MANUFACTURING CO., LTD.) 25 March 2021 (2021-03-25) description, paragraphs [0019]-[0098] | 1-13 |
| A | CN 213213456 U (MURATA MANUFACTURING CO., LTD.) 14 May 2021 (2021-05-14) entire document | 1-13 |
| A | US 2018131344 A1 (SKYWORKS SOLUTIONS, INC.) 10 May 2018 (2018-05-10) entire document | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 August 2023** | **30 August 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/096396**

| Patent document cited in search report | | | Publication date (day/month/year) | Patent family member(s) | | | Publication date (day/month/year) |
|---|---|---|---|---|---|---|---|
| CN | 102420625 | A | 18 April 2012 | WO | 2013075404 | A1 | 30 May 2013 |
| CN | 201167317 | Y | 17 December 2008 | None | | | |
| CN | 114337703 | A | 12 April 2022 | None | | | |
| US | 2021092214 | A1 | 25 March 2021 | JP | 2021048558 | A | 25 March 2021 |
| | | | | CN | 213213456 | U | 14 May 2021 |
| CN | 213213456 | U | 14 May 2021 | US | 2021092214 | A1 | 25 March 2021 |
| | | | | JP | 2021048558 | A | 25 March 2021 |
| US | 2018131344 | A1 | 10 May 2018 | JP | 2018088675 | A | 07 June 2018 |

Form PCT/ISA/210 (patent family annex) (July 2022)

**EP 4 503 451 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210720531

- CN 202211202645